# EUROPEAN PATENT APPLICATION

(11) **EP 4 339 229 A1**
(43) Date of publication of application: **20.03.2024**
(21) Application number: 21941955.3
(22) Date of filing: 14.05.2021
(51) Int. Cl.: C08J 5/00, B29C 43/52

(54) **METHOD FOR PRODUCING SOLID OBJECT**

(71) Applicant: TOYOBO MC Corporation, Osaka 530-0001 (JP)
(72) Inventor: TANIGAWA, Masahito, Otsu-shi, Shiga 520-0292 (JP); FUNAOKA, Daiki, Tokyo 104-8345 (JP); HAMASAKI, Ryo, Otsu-shi, Shiga 520-0292 (JP); FUJII, Masashi, Otsu-shi, Shiga 520-0292 (JP)
(74) Representative: Müller-Boré & Partner Patentanwälte PartG mbB
(86) International application number: PCT/JP2021/018365
(87) International publication number: WO 2022/239224

(57) **Abstract**

An object of the present invention is to provide a new method for producing a solid object of a thermally curable composition.

The method for producing a solid object of a thermally curable composition includes:
a first heating step of heating the thermally curable composition at a temperature of a melting onset temperature (°C) of the thermally curable composition or more and less than a curing onset temperature (°C) of the thermally curable composition; and
a first cooling step of introducing the thermally curable composition into a mold and cooling the thermally curable composition to a temperature lower than the melting onset temperature (°C).

## Description

### TECHNICAL FIELD

The present invention relates to a method for producing a solid object of a thermally curable composition.

### BACKGROUND ART

Conventionally, electric components used in vehicles, electric appliances, or the like have been protected, for example, by sealing an electronic element with resin in order to avoid degradation caused by dust, moisture, or the like. For the sealing, a thermally curable composition superior in heat resistance has been widely used.

For example, Patent Document 1 discloses a crystalline thermally-curable composition for sealing an electrical or electronic component, comprising a crystalline radically polymerizable compound, a radical polymerization initiator, and the like. Further, Patent Document 1 describes that a sealed body of an electrical or electronic component is obtained by various methods for molding a thermally curable composition, and in Examples, it is described that a thermally curable composition was cured at a mold temperature of 165°C.

### RELATED ART DOCUMENTS

### PATENT DOCUMENTS

Patent Document 1: WO 2018/159387 A

### SUMMARY OF THE INVENTION

### PROBLEMS TO BE SOLVED BY THE INVENTION

As described above, a solid object of a thermally curable composition has been used for the purpose of protecting electric components and the like, but in recent years, a new method for producing such a solid object has been demanded.

The present invention has been devised in view of the above circumstances, and an object of the present invention is to provide a new method for producing a solid object of a thermally curable composition.

### SOLUTIONS TO THE PROBLEMS

The method for producing a solid object according to an embodiment of the present invention that has been able to solve the above problems is as follows.
[1] A method for producing a solid object of a thermally curable composition, the method comprising:
   a first heating step of heating the thermally curable composition at a temperature of a melting onset temperature (°C) of the thermally curable composition or more and less than a curing onset temperature (°C) of the thermally curable composition; and
   a first cooling step of introducing the thermally curable composition into a mold and cooling the thermally curable composition to a temperature lower than the melting onset temperature (°C).

There hitherto are no methods for producing a solid object, comprising a step in which, as described above, a thermally curable composition is heated at a temperature of its melting onset temperature (°C) or more and less than its curing onset temperature (°C), then introduced to the inside of a mold, and then cooled. That is, according to an embodiment of the present invention, a new method for producing a solid object of a thermally curable composition can be provided.

Furthermore, methods for producing a solid object according to embodiments of the present invention are as described in any one of the following [2] to [24].
[2] The method for producing a solid object according to [1], wherein the thermally curable composition comprises a crystalline radically polymerizable compound.
[3] The method for producing a solid object according to [2], wherein the thermally curable composition comprises a free radical generator that generates at least one free radical at a temperature of the curing onset temperature (°C) or more.
[4] The method for producing a solid object according to any one of [1] to [3], wherein the melting onset temperature is a heat absorption onset temperature TA1 (°C) in differential scanning calorimetry of the thermally curable composition.
[5] The method for producing a solid object according to [4], wherein the heat absorption onset temperature TA1 (°C) is 36°C or more.
[6] The method for producing a solid object according to any one of [1] to [5], wherein the curing onset temperature is a temperature of a heat absorption completion temperature TA2 (°C) in differential scanning calorimetry of the thermally curable composition + 10°C or more.
[7] The method for producing a solid object according to any one of [1] to [6], the method further comprising:
   a second heating step of heating the solid object at a temperature of the curing onset temperature (°C) or more; and
   a second cooling step of cooling the solid object to a temperature less than the curing onset temperature (°C).
[8] The method for producing a solid object according to [7], wherein the heating in the second heating step is performed collectively for a plurality of the solid objects after the first cooling step.
[9] The method for producing a solid object according to [7], wherein the heating in the second heating step is performed by sequentially heating a plurality of the solid objects after the first cooling step.
[10] The method for producing a solid object according to any one of [1] to [9], wherein the thermally curable composition comprises a free radical scavenger.
[11] The method for producing a solid object according to any one of [1] to [10], wherein the thermally curable composition comprises a non-crystalline radically polymerizable compound.
[12] The method for producing a solid object according to any one of [1] to [11], wherein the crystalline radically polymerizable compound is at least one selected from the group consisting of an epoxy (meth)acrylate, a urethane (meth)acrylate, a polyester (meth)acrylate, a polyether (meth)acrylate, and an unsaturated polyester.
[13] The method for producing a solid object according to any one of [1] to [12], wherein the solid object is a solid object to be used in attachment to an electric component.
[14] The method for producing a solid object according to any one of [1] to [13], wherein the heating temperature in the first heating step is equal to the melting onset temperature (°C) + 10(°C) or more.
[15] The method for producing a solid object according to any one of [1] to [14], wherein the heating temperature in the first heating step is equal to the melting onset temperature (°C) + 15(°C) or more.
[16] The method for producing a solid object according to any one of [1] to [15], wherein the heating temperature in the first heating step is equal to the melting onset temperature (°C) + 25(°C) or more.
[17] The method for producing a solid object according to any one of [1] to [16], wherein the heating temperature in the first heating step is equal to the curing onset temperature (°C) - 5(°C) or less.
[18] The method for producing a solid object according to any one of [1] to [17], wherein the heating temperature in the first heating step is equal to the curing onset temperature (°C) - 10(°C) or less.
[19] The method for producing a solid object according to any one of [1] to [18], wherein the heating temperature in the first heating step is equal to the curing onset temperature (°C) - 20(°C) or less.
[20] The method for producing a solid object according to any one of [1] to [19], wherein the thermally curable composition has a melt viscosity at 90°C of 1000 Pa•s or less.
[21] The method for producing a solid object according to any one of [1] to [20], wherein the thermally curable composition has a melt viscosity at 90°C of 200 Pa•s or less.
[22] The method for producing a solid object according to any one of [1] to [21], wherein the thermally curable composition has a melt viscosity at 90°C of 100 Pa•s or less.
[23] The method for producing a solid object according to any one of [1] to [22], wherein the thermally curable composition has a melt viscosity at 90°C of 30 Pa•s or less.
[24] The method for producing a solid object according to any one of [1] to [23], wherein the thermally curable composition has a melt viscosity at 90°C of 0.5 Pa•s or more.

### EFFECTS OF THE INVENTION

According to the present invention, new methods for producing a solid object of a thermally curable composition can be provided by the above configurations.

### BRIEF DESCRIPTION OF THE DRAWINGS

Fig. 1 shows a part of a DSC curve of a thermally curable composition.
Fig. 2 is a plan view of an assembly of a polybutylene terephthalate container and a glass epoxy substrate.
Fig. 3 is a cross-sectional view of the assembly of Fig. 2 placed in a metal mold.
Fig. 4 is a cross-sectional view of a solid object composite.
Fig. 5 is a plan view of a polybutylene terephthalate frame.
Fig. 6 is a plan view of an assembly of a polybutylene terephthalate container and a glass epoxy substrate.
Fig. 7 is a cross-sectional view of an assembly of a polybutylene terephthalate container, a glass epoxy substrate, and a polybutylene terephthalate frame placed in a mold.
Fig. 8 is a cross-sectional view of a solid object composite.

### MODE FOR CARRYING OUT THE INVENTION

The method for producing a solid object of an embodiment of the present invention is a method for producing a solid object of a thermally curable composition, the method comprising: a first heating step of heating the thermally curable composition at a temperature of a melting onset temperature (°C) of the thermally curable composition or more and less than a curing onset temperature (°C) of the thermally curable composition; and a first cooling step of introducing the thermally curable composition into a mold and cooling the thermally curable composition to a temperature lower than the melting onset temperature (°C).

There hitherto are no methods for producing a solid object, comprising a step in which, as described above, a thermally curable composition is heated at a temperature of its melting onset temperature (°C) or more and less than its curing onset temperature (°C), then introduced to the inside of a mold, and then cooled. That is, according to one or more embodiments of the present invention, a new method for producing a solid object of a thermally curable composition can be provided. Furthermore, by introducing the thermally curable composition having fluidity after the first heating step to the inside of a mold and then cooling the thermally curable composition, a solid object having a shape conforming to the shape in the mold can be obtained. As a result, for example, a solid object having a complicated surface shape, a solid object having a thin portion, or the like is easily obtained. Hereinafter, first, the respective steps will be described in detail.

In the first heating step, heating is performed at a temperature that is equal to the melting onset temperature (°C) of the thermally curable composition or more and less than the curing onset temperature (°C) of the thermally curable composition. By heating the thermally curable composition at a temperature that is equal to the melting onset temperature (°C) or more, it is possible to bring the thermally curable composition into a molten state to exhibit fluidity or improve fluidity. Therefore, the heating temperature is preferably equal to the melting onset temperature (°C) + 10(°C) or more, more preferably equal to the melting onset temperature (°C) + 15(°C) or more, and still more preferably equal to the melting onset temperature (°C) + 25(°C) or more. On the other hand, by heating the thermally curable composition at a temperature that is less than the curing onset temperature (°C) of the thermally curable composition, it is possible to prevent a decrease in fluidity of the thermally curable composition. Therefore, the heating temperature is preferably equal to the curing onset temperature (°C) - 5(°C) or less, more preferably equal to the curing onset temperature (°C) - 10(°C) or less, and still more preferably equal to the curing onset temperature (°C) - 20(°C) or less.

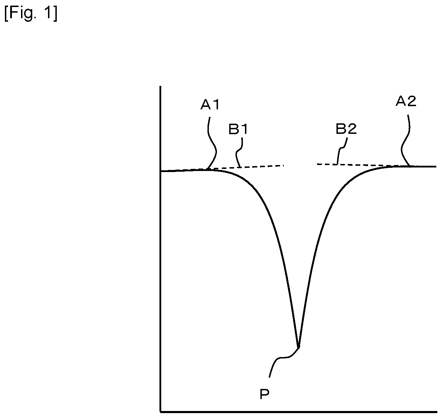

The melting onset temperature (°C) of the thermally curable composition is a temperature (°C) at which the thermally curable composition starts to melt, and examples of the melting onset temperature (°C) include a heat absorption onset temperature TA1 (°C) in differential scanning calorimetry (DSC) of the thermally curable composition. The heat absorption onset temperature TA1 (°C) corresponds to the temperature at a point A1 at which the heat flow (mW) starts to decrease away from a baseline B1 toward an endothermic peak P in a DSC curve obtained by raising the temperature of the thermally curable composition from -60°C to 200°C at a temperature raising rate of 10°C/min as depicted in Fig. 1. The vertical axis direction of the DSC curve represents heat flow (mW), and the horizontal axis direction represents temperature (°C). In the case of a thermally curable composition having no endothermic peak in the DSC curve, the heating temperature in the first heating step may be, for example, 36°C or more. The heating temperature is more preferably 40°C or more, still more preferably 50°C or more, further preferably 60°C or more, and particularly preferably 70°C or more.

The curing onset temperature (°C) of the thermally curable composition is a temperature (°C) at which the thermally curable composition starts to cure. The curing onset temperature (°C) corresponds to the temperature at a point at which the heat flow (mW) starts to increase away from the baseline on the lower temperature side toward an exothermic peak in a DSC curve obtained by raising the temperature of the thermally curable composition from -60°C to 200°C at a temperature raising rate of 10°C/min. The exothermic peak is a peak that appears on the higher temperature side than the endothermic peak.

In the first cooling step, the thermally curable composition is introduced to the inside of a mold and cooled to a temperature that is lower than the melting onset temperature (°C). By introducing the thermally curable composition having fluidity after the first heating step to the inside of a mold and then cooling the thermally curable composition as described above, a solid object having a shape conforming to the shape in the mold can be obtained. In the first cooling step, it is preferable to cool the thermally curable composition to a temperature that is equal to the melting onset temperature (°C) - 10°C or less, more preferable to cool the thermally curable composition to a temperature that is equal to the melting onset temperature (°C) - 20°C or less, and still more preferable to cool the thermally curable composition to a temperature that is equal to the melting onset temperature (°C) - 25°C or less. Specifically, it is preferable to cool the thermally curable composition to a temperature of 45°C or less, more preferably to a temperature of 35°C or less, and still more preferably to a temperature of 30°C or less. This makes it easy to release the solid object from the mold without losing the shape of the solid object.

The temperature of the mold before introduction the thermally curable composition in the first cooling step is preferably 5°C or more. This makes it easy to maintain the fluidity of the thermally curable composition to some extent, so that a solid object having a shape conforming to the shape of the inside of the mold is easily obtained. The temperature is more preferably 15°C or more, and still more preferably 20°C or more. On the other hand, the upper limit of the temperature is not particularly limited, but may be, for example, 35°C or less.

"The inside of a mold" means the inside of a mold having a certain shape, and examples thereof include the inside of a container for molding, the inside of a mold, a gap present in an electronic component, and the inside of a recess present on a surface of an electronic component. The material of the mold is not particularly limited, and examples thereof include metal and resin, and those having heat resistance are preferable.

The method for introducing the thermally curable composition into a mold is not particularly limited, and examples thereof include a method of pouring the thermally curable composition into the mold, a method of dropping the thermally curable composition into the mold, a method of injecting the thermally curable composition into the mold, and a method of pushing the thermally curable composition into the mold. Examples thereof specifically include an injection molding method, a transfer molding method, an insert molding method, a compression molding method, and a hot melt molding method. The pressure at the time of introducing the thermally curable composition into the mold is, for example, preferably 0.1 MPa or more, more preferably 0.3 MPa or more, still more preferably 1 MPa or more, and further preferably 2 MPa or more. On the other hand, the pressure is preferably 10 MPa or less, and more preferably 5 MPa or less.

The solid object is the thermally curable composition provided with a certain shape through being introduced into a mold. The solid object is not limited to one having a certain shape in a state of being released from the mold, and may have a certain shape in the mold. In addition, for example, bonding, fixing, or sealing can be performed using the solid object. For example, the solid object may be bonded to the mold, and/or may be bonded to a member other than the mold (hereinafter, sometimes referred to as another member). In addition, the solid object may be adhered, fused, or the like to the mold and another member to bond, fix, or the like the mold and the other member together. The solid object may seal the mold, seal another member, or seal the mold and another member. Examples of the other member include an electronic component, a resin plate-shaped body, a metal plate-shaped body, a resin rod-shaped body, and a metal rod-shaped body. The shape of the solid object is not particularly limited, and examples thereof include a sheet shape, a polygonal columnar shape, a cylindrical shape, a rectangular parallelepiped, a rectangular parallelepiped, a conical shape, a pyramid shape, and a spherical shape.

The method for producing a solid object preferably further comprises a second heating step of heating the solid object at a temperature of the curing onset temperature (°C) or more, and a second cooling step of cooling the solid object to a temperature less than the curing onset temperature (°C). By subjecting the solid object having a shape conforming to the shape of the inside of the mold to curing treatment as described above, a cured solid object having a desired shape is easily obtained. Furthermore, by performing the curing treatment, the heat resistance is improved.

The heating temperature in the second heating step is more preferably equal to the curing onset temperature (°C) + 10(°C) or more, still more preferably equal to the curing onset temperature (°C) + 30(°C) or more, and further preferably equal to the curing onset temperature (°C) + 40(°C) or more. On the other hand, when the heating temperature is equal to the curing onset temperature (°C) + 100(°C) or less, the manufacturing cost can be reduced. Therefore, the heating temperature is preferably equal to the curing onset temperature (°C) + 100(°C) or less, more preferably equal to the curing onset temperature (°C) + 80(°C) or less, still more preferably equal to the curing onset temperature (°C) + 70(°C) or less, and further preferably equal to the curing onset temperature (°C) + 60(°C) or less.

The heating time in the second heating step is preferably 1 minute or more, and more preferably 2 minutes or more, and is preferably 250 minutes or less, more preferably 100 minutes or less, still more preferably 30 minutes or less, and further preferably 10 minutes or less.

The second heating step may be performed with the solid object of the thermally curable composition being kept in the mold after the first cooling step. As a result, a step of taking out the solid object can be omitted, so that the workability is improved. On the other hand, the second heating step may be performed after the solid object of the thermally curable composition is released from the mold after the first cooling step and taken out from the inside of the mold. The second heating step may be performed after the solid object of the thermally curable composition is released from the mold and taken out from the inside of the mold after the first cooling step and the solid object taken out is put in another mold. The other mold is preferably smaller in volume than the mold used in the first cooling step. It is also preferable that the other mold has a mass (g) smaller than that of the mold used in the first cooling step. Owing to this, heat is easily transferred to the solid object, so that the solid object is easily cured. The material of the other mold is not particularly limited, and examples thereof include metal and resin.

The heating in the second heating step may be performed collectively for a plurality of the solid objects after the first cooling step. Examples of the heating include an embodiment in which the plurality of the solid objects after the first cooling step are put in a heating oven and heated collectively. Such collective heating improves workability.

The heating in the second heating step may be performed by sequentially heating the plurality of the solid objects after the first cooling step. Examples of the heating include an embodiment in which the plurality of the solid objects after the first cooling step are disposed on a conveyor and heated by passing them through a continuous heating oven. This reduces variations in hardness of the cured solid object.

In the second cooling step, it is preferable to cool the solid object to a temperature less than the curing onset temperature (°C), it is more preferable to cool the solid object to a temperature that is equal to the melting onset temperature (°C) or less, it is still more preferable to cool the solid object to a temperature that is equal to the melting onset temperature (°C) - 10°C or less, and it is further preferable to cool the solid object to a temperature that is equal to the melting onset temperature (°C) - 25°C or less.

Next, the thermally curable composition will be described. The thermally curable composition may be any composition that is hardened through heat treatment.

The heat absorption onset temperature TA1 (°C) of the thermally curable composition is preferably 36°C or more. This makes it easy to improve the blocking resistance of the resulting solid object. The heat absorption onset temperature is more preferably 40°C or more, and still more preferably 50°C or more. On the other hand, the heat absorption onset temperature TA1 (°C) of the thermally curable composition is preferably 70°C or less. This makes it easy to bring the thermally curable composition into a molten state, so that the manufacturing cost can be reduced. The heat absorption onset temperature is more preferably 60°C or less, and still more preferably 55°C or less.

The curing onset temperature of the thermally curable composition is preferably a temperature of a heat absorption completion temperature TA2 (°C) in differential scanning calorimetry of the thermally curable composition + 10°C or more. This makes it easy to prevent the thermally curable composition from being cured in the first heating step. The curing onset temperature is more preferably equal to the heat absorption completion temperature TA2 (°C) + 15°C or more, and still more preferably equal to the heat absorption completion temperature TA2 (°C) + 20°C or more. The heat absorption completion temperature TA2 (°C) can be measured using a differential scanning calorimeter in the same manner as the heat absorption onset temperature TA1 (°C), and corresponds to the temperature at a point A2 at which the heat flow (mW) increases from the endothermic peak P to reach the baseline B2 in the DSC curve as depicted in Fig. 1. The curing onset temperature of the thermally curable composition can be controlled, for example, by preparing the type, amount, and the like of the polymerizable compounds and free radical generator described later. Specifically, the heat absorption completion temperature TA2 (°C) of the thermally curable composition is preferably 60°C or more, more preferably 65°C or more, and still more preferably 70°C or more. On the other hand, the heat absorption completion temperature TA2 (°C) of the thermally curable composition is preferably 80°C or less, more preferably 78°C or less, and still more preferably 76°C or less.

The thermally curable composition preferably comprises a radically polymerizable compound, and more preferably comprises a crystalline radically polymerizable compound. When the thermally curable composition comprises the crystalline radically polymerizable compound, the later-described residence stability, blocking resistance, curability (curing time), etc. can be easily improved. Examples of the radically polymerizable compound include compounds having a radically polymerizable carbon-carbon double bond. The number of the radically polymerizable carbon-carbon double bond which the radically polymerizable compound has is not limited to one, and may be two, or may be three or more. The crystalline radically polymerizable compound is superior in fluidity in the first heating step and curability in the second heating step. The term "crystalline" means that an endothermic peak is observed in a DSC curve obtained by raising the temperature of the composition from -60°C to 200°C at a temperature raising rate of 10°C/min by differential scanning calorimetry. As the crystalline radically polymerizable compound, at least one selected from the group consisting of epoxy (meth)acrylate, urethane (meth)acrylate, polyester (meth)acrylate, polyether (meth)acrylate, unsaturated polyester, and a crystalline radically-polymerizable monomer is preferable, and at least one selected from the group consisting of epoxy (meth)acrylate, urethane (meth)acrylate, polyester (meth)acrylate, polyether (meth)acrylate, and unsaturated polyester is more preferable. The "(meth)acrylate" means "acrylate" or "methacrylate".

Examples of the epoxy (meth)acrylate include an epoxy (meth)acrylate obtained through an addition reaction of an acrylate or methacrylate to an epoxy resin having two or more glycidyl ether groups in one molecule, and having a double bond derived from the acrylate or methacrylate at a molecular terminal. Specific examples thereof include a (meth)acrylate adduct of a bisphenol A type epoxy resin, a (meth)acrylate adduct of a hydrogenated bisphenol A type epoxy resin, a (meth)acrylate adduct of a phenol or cresol novolac type epoxy resin, and a (meth)acrylate adduct of a biphenyl type epoxy resin. These may be used singly or two or more of them may be used in combination.

Examples of the urethane (meth)acrylate include compounds obtained by reacting at least two or more compounds among a polyisocyanate, a hydroxy group-containing (meth)acrylate, and a polyol.

Examples of the polyisocyanate include aromatic polyisocyanate compounds and aliphatic polyisocyanate compounds. Specific examples thereof include tolylene diisocyanate, diphenylmethane diisocyanate, hydrogenated diphenylmethane diisocyanate, 1,6-hexamethylene diisocyanate, isophorone diisocyanate, xylylene diisocyanate, hydrogenated xylylene diisocyanate, trifunctional isocyanate having an isocyanurate ring obtained by trimerizing a bifunctional isocyanate compound, and an isocyanate prepolymer modified with a polyol. These may be used singly or two or more of them may be used in combination.

Examples of the hydroxy group-containing (meth)acrylate include hydroxyethyl (meth)acrylate, 2-hydroxypropyl (meth)acrylate, 2-hydroxybutyl (meth)acrylate, phenoxyhydroxypropyl (meth)acrylate, trimethylolpropane (meth)acrylate, and dipropylene glycol mono(meth)acrylate. These may be used singly or two or more of them may be used in combination.

Examples of the polyol include a polyalcohol having two or more hydroxy groups in one molecule, a polyester polyol having two or more hydroxy groups in one molecule, and a polyether polyol having two or more hydroxy groups in one molecule. These may be used singly or two or more of them may be used in combination.

Examples of the polyalcohol having two or more hydroxy groups in one molecule include neopentyl glycol, ethylene glycol, 1,3-propanediol, 1,2-butanediol, 1,3-butanediol, 1,4-butanediol, 1,5-pentanediol, 1,6-hexanediol, 1,7-heptanediol, 1,8-octanediol, 1,9-nonanediol, 1,10-decanediol, propylene glycol, diethylene glycol, dipropylene glycol, trimethylene glycol, hydrogenated bisphenol A, bisphenol A ethylene oxide adduct, and bisphenol A propylene oxide adduct. Examples of the polyester polyol having two or more hydroxy groups in one molecule include saturated polyester polyols obtained through a dehydration condensation reaction of a polyalcohol such as neopentyl glycol, ethylene glycol, propylene glycol, diethylene glycol, dipropylene glycol, trimethylene glycol, hydrogenated bisphenol A, bisphenol A ethylene oxide adduct, or bisphenol A propylene oxide adduct with a polybasic acid such as adipic acid, phthalic acid (or anhydride thereof), isophthalic acid, terephthalic acid, or trimellitic acid. Examples of the polyether polyol having two or more hydroxy groups in one molecule include polyethylene glycol, polypropylene glycol, and polycaprolactone. These may be used singly or two or more of them may be used in combination.

Examples of the polyester (meth)acrylate include a polyester (meth)acrylate obtained through esterification of a polyester polyol with a (meth)acrylate, and a polyester (meth)acrylate having a double bond of a (meth)acrylate at a molecular terminal and obtained through a reaction of a polyester having an acid terminal with a (meth)acrylate having a glycidyl group. These may be used singly or two or more of them may be used in combination.

Examples of the polyether (meth)acrylate include a polyether (meth)acrylate obtained through esterification of a polyether polyol with a (meth)acrylate, and a polyether (meth)acrylate having a double bond of a (meth)acrylate at a molecular terminal and obtained through a reaction of a polyether having an acid terminal with a (meth)acrylate having a glycidyl group. These may be used singly or two or more of them may be used in combination.

Examples of the unsaturated polyester include one synthesized by subjecting an unsaturated polybasic acid, a saturated polybasic acid, and a glycol to a dehydration condensation reaction. Examples of the unsaturated polybasic acid include maleic acid, maleic anhydride, fumaric acid, citraconic acid, mesaconic acid, itaconic acid, tetrahydrophthalic acid, tetrahydrophthalic anhydride, methyltetrahydrophthalic anhydride, and glutaconic acid. Examples of the saturated polybasic acid include phthalic acid, phthalic anhydride, isophthalic acid, terephthalic acid, succinic acid, adipic acid, sebacic acid, azelaic acid, tetrahydrophthalic anhydride, methyltetrahydrophthalic anhydride, endomethylenetetrahydrophthalic anhydride, HET acid, and tetrabromophthalic anhydride. Examples of the glycol include ethylene glycol, 1,3-propanediol, 1,4-butanediol, 1,5-pentanediol, 1,6-hexanediol, 1,8-octanediol, propylene glycol, diethylene glycol, triethylene glycol, dipropylene glycol, neopentyl glycol, 1,3-butanediol, hydrogenated bisphenol A, a bisphenol A propylene oxide compound, cyclohexanedimethanol, and dibromoneopentyl glycol. These may be used singly or two or more of them may be used in combination.

Examples of the crystalline radically-polymerizable monomer include ethoxylated isocyanuric acid triacrylate, polyethylene glycol di(meth)acrylate, methoxypolyethylene glycol (meth)acrylate, behenyl acrylate, tetramethylpiperidyl methacrylate, trimethallyl isocyanurate, diacetone acrylamide, dimethyl itaconate, vinyl stearate, N-vinylcarbazole, N-methylolacrylamide, acrylamide, tolylenediallylcarbamate, maleimide, and acenaphthylene. These may be used singly or two or more of them may be used in combination.

Note that these radically polymerizable compounds can be provided with crystalline nature by preparing the combination, blending proportions, and the like of the components.

In 100% by mass of the thermally curable composition, the content of the crystalline radically polymerizable compound is preferably 5% by mass or more, and more preferably 10% by mass or more. This facilitates curing during the curing treatment. On the other hand, the content of the crystalline radically polymerizable compound is preferably 90% by mass or less, more preferably 50% by mass or less, and still more preferably 25% by mass or less. This makes it possible to easily add various additives and exert their respective functions.

The thermally curable composition may comprise a non-crystalline radically polymerizable compound. The term "non-crystalline" means that no endothermic peak is observed in a DSC curve obtained by raising the temperature of the composition from -60°C to 200°C at a temperature raising rate of 10°C/min by differential scanning calorimetry. The non-crystalline radically polymerizable compound can be provided with non-crystalline nature by preparing the combination, blending proportions, and the like of the components of the radically polymerizable compound.

In 100% by mass of the thermally curable composition, the content of the non-crystalline radically polymerizable compound is preferably 2.5% by mass or more, and more preferably 5% by mass or more, and is preferably 45% by mass or less, more preferably 25% by mass or less, and still more preferably 13% by mass or less.

The thermally curable composition may comprise a radically polymerizable monomer that is liquid at normal temperature. Examples of the radically polymerizable monomer that is liquid at normal temperature include acrylates; methacrylates; vinyl aromatic compounds such as styrene monomer having a vinyl group, α-methylstyrene, vinyltoluene, and α-chlorostyrene; vinyl esters such as vinyl acetate, vinyl propionate, vinyl lactate, and vinyl butyrate; (meth)acrylate esters such as methyl acrylate, ethyl acrylate, n-butyl acrylate, methyl methacrylate, ethyl methacrylate, and n-butyl methacrylate. These may be used singly or two or more of them may be used in combination. For a preferred content of the radically polymerizable monomer that is liquid at normal temperature, reference can be made to the description of the preferred content of the non-crystalline radically polymerizable compound.

The thermally curable composition may comprise a di- or more functional radically-polymerizable monomer such as triallyl cyanurate, diethylene glycol dimethacrylate, diallyl tetrabromophthalate, phenoxyethyl acrylate, 2-hydroxyethyl acrylate, 1,6-hexanediol diacrylate, diallyl phthalate having an allyl group, diallyl maleate, diallyl fumarate, or triallyl isocyanurate. These may be used singly or two or more of them may be used in combination.

The thermally curable composition may comprise a radically polymerizable multimer such as a diallyl phthalate prepolymer, a TAIC prepolymer, an epoxy prepolymer, a urethane prepolymer, or an acrylate prepolymer. These may be used singly or two or more of them may be used in combination.

The thermally curable composition may comprise a thermosetting resin. Examples of the thermosetting resin include epoxy resins, cyanate ester resins, unsaturated polyester resins, vinyl ester resins, phenol resins, urea melamine resins, polyimides, and bismaleimide resins. These may be used singly or two or more of them may be used in combination. In 100% by mass of the thermally curable composition, the content of the thermosetting resin is preferably 5% by mass or more, and more preferably 10% by mass or more, and is preferably 90% by mass or less, more preferably 50% by mass or less, and still more preferably 25% by mass or less.

The thermally curable composition preferably comprises a free radical generator that generates at least one free radical at a temperature of the curing onset temperature (°C) or more. Examples of the free radical generator include thermal decomposition type organic peroxides. The free radical generation temperature TB 1 (°C) of the free radical generator is preferably 90°C or more, more preferably 100°C or more, and still more preferably 105°C or more, and is preferably 170°C or less, more preferably 150°C or less, and still more preferably 130°C or less. In 100% by mass of the thermally curable composition, the content of the free radical generator is preferably 5% by mass or less, more preferably 2% by mass or less, and still more preferably 1% by mass or less. On the other hand, the lower limit may be, for example, 0.05% by mass or more.

Examples of the organic peroxide include t-butylperoxy-2-ethylhexyl monocarbonate, 1,1-di(t-hexylperoxy)cyclohexane, 1,1-di(t-butylperoxy)-3,3,5-trimethylcyclohexane, t-butylperoxyoctoate, benzoyl peroxide, methylethylketone peroxide, acetylacetone peroxide, t-butylperoxybenzoate, and dicumyl peroxide. These may be used singly or two or more of them may be used in combination.

The thermally curable composition preferably comprises a free radical scavenger. Examples of the free radical scavenger include quinones such as hydroquinone, monomethyl ether hydroquinone, toluhydroquinone, di-t-4-methylphenol, monomethyl ether hydroquinone, phenothiazine, t-butylcatechol, para-benzoquinone, and pyrogallol; phenolic compounds such as 2,6-di-t-butyl-p-cresol, 2,2-methylene-bis-(4-methyl-6-t-butylphenol), and 1,1,3-tris-(2-methyl-4-hydroxy-5-t-butylphenyl)butane; and piperidine-1-oxyls such as 4-hydroxy-2,2,6,6-tetramethylpiperidine-1-oxyl, 4-oxo-2,2,6,6-tetramethylpiperidine-1-oxyl, 4-methoxy-2,2,6,6-tetramethylpiperidine-1-oxyl, 4-carboxy-2,2,6,6-tetramethylpiperidine-1-oxyl, and 2,2,6,6-tetramethylpiperidine-1-oxyl. Using these makes it possible to inhibit thickening at the time of melting. These may be used singly or two or more of them may be used in combination. In 100% by mass of the thermally curable composition, the content of the free radical scavenger is preferably 2% by mass or less, more preferably 1% by mass or less, and still more preferably 0.5% by mass or less. The lower limit may be, for example, 0.01% by mass or more.

The thermally curable composition may comprise a filler in order to improve strength and the like. Examples of the filler include an inorganic filler. Examples of the inorganic filler include calcium carbonate, magnesium carbonate, barium carbonate, calcium hydroxide, aluminum hydroxide, magnesium hydroxide, magnesium oxide, alumina, silica, zinc oxide, mica, aluminum nitride, and boron nitride. Among them, silica is preferred because silica easily flows. These may be used singly or two or more of them may be used in combination. In 100% by mass of the thermally curable composition, the content of the filler is preferably 50% by mass or more, and more preferably 70% by mass or more. Owing to this, the function of the filler is easily exhibited. On the other hand, the content of the filler is preferably 95% by mass or less, and more preferably 90% by mass or less.

The thermally curable composition may further comprise various additives. Examples of the additive include a coupling agent, a flame retardant, a weathering agent, a light resistance agent, a colorant, a stress releaser, a mold release agent, and a curing accelerator. These may be used singly or two or more of them may be used in combination. In 100% by mass of the thermally curable composition, the total content of the various additives is preferably 5% by mass or less, more preferably 2% by mass or less, and still more preferably 1% by mass or less. The lower limit may be, for example, 0.01% by mass or more, or may be 0.1% by mass or more.

Examples of the coupling agent include a silane-based coupling agent and a titanate-based coupling agent. Examples of the silane-based coupling agent include an epoxysilane-based coupling agent, an aminosilane-based coupling agent, a cationic silane-based coupling agent, a vinylsilane-based coupling agent, an acrylsilane-based coupling agent, a mercaptosilane-based coupling agent, and composite systems thereof. These may be used singly or two or more of them may be used in combination. Examples of the flame retardant include: organic flame retardants such as halogen-based flame retardants, phosphorus-based flame retardants, nitrogen-based flame retardants, and complex-type flame retardants; and inorganic flame retardants such as metal hydroxides, antimony-based flame retardants, red phosphorus-based flame retardants, silicone-based flame retardants, and borate salts. These may be used singly or two or more of them may be used in combination. Examples of the weathering agent include antioxidants such as phenol and ultraviolet absorbers such as benzophenone-based compounds. Examples of the light resistance agent include benzophenone-based compounds, salicylate-based compounds, benzotriazole-based compounds, and hindered amine-based compounds. Examples of the colorant include a pigment and a dye. Examples of the pigment include kaolin, synthetic iron oxide red, cadmium yellow, nickel titanium yellow, strontium yellow, hydrous chromium oxide, chromium oxide, cobalt aluminate, and synthetic ultramarine blue. Examples of the dye include isoindolinone, isoindoline, quinophthalone, xanthene, diketopyrrolopyrrole, perylene, perinone, anthraquinone, indigoid, oxazine, quinacridone, benzimidazolone, violanthrone, phthalocyanine, and azomethine. These may be used singly or two or more of them may be used in combination. Examples of the stress releaser include silicone oil, silicone rubber, acrylic rubber, urethane rubber, acrylonitrile-butadiene rubber, and thermoplastic elastomer. Examples of the mold release agent include waxes such as fatty acid-based waxes, fatty acid metal salt-based waxes, and mineral-based waxes.

Examples of the curing accelerator include a modified imidazole-based curing accelerator, a modified aliphatic polyamine-based accelerator, and a modified polyamine-based accelerator.

The thermally curable composition preferably has a melt viscosity at 90°C of 1000 Pa•s or less. This makes it easy to form the thermally curable composition into a shape conforming to the shape of the inside of the mold. The melt viscosity is more preferably 200 Pa•s or less, still more preferably 100 Pa•s or less, and further preferably 30 Pa•s or less. On the other hand, the lower limit of the melt viscosity of the thermally curable composition may be 0.5 Pa•s or more, and may be 1 Pa•s or more. The melt viscosity can be measured by the method disclosed in Examples described later.

In the thermally curable composition, the rate of change in melt viscosity before and after heating at 90°C for 24 hours is preferably less than 10%, more preferably less than 5%, and still more preferably 3% or less. This makes it possible to improve the residence stability of the thermally curable composition. On the other hand, the lower limit of the rate of change in melt viscosity may be, for example, 0.5% or more. The rate of change in melt viscosity can be measured by the method disclosed in Examples described later.

The thermally curable composition preferably has a curing time of 300 minutes or less when heated at 165°C, which is measured on the basis of the method disclosed in Examples described later. This improves workability. The curing time is more preferably 200 minutes or less, still more preferably 50 minutes or less, further preferably 5 minutes or less, and particularly preferably 3 minutes or less. On the other hand, the lower limit of the curing time may be 1 minute or more, or may be 2 minutes or more.

The weight loss ratio of the thermally curable composition before and after heating at 200°C for 1 hour is preferably less than 1%, more preferably less than 0.5%, and still more preferably less than 0.3%. This improves heat resistance. On the other hand, the lower limit of the weight loss ratio may be, for example, 0.1% or more. The weight loss ratio can be measured by the method disclosed in Examples described later.

The thermally curable composition preferably has a glass transition point of 0°C or more, more preferably has a glass transition point of 50°C or more, and still more preferably has a glass transition point of 110°C or more. On the other hand, the glass transition point of the thermally curable composition may be 300°C or less, and may be 260°C or less. The glass transition point can be measured by the method disclosed in Examples described later.

The solid object is preferably one to be used in attachment to an electric component. Examples of the electric component include an inverter, a power module, an ignition coil, an engine control unit (ECU), and a sensor such as an oil level sensor. The solid object may be attached to the surface of an electric component, may be attached to the inside of an electric component, or may be attached to the surface and the inside of an electric component. The same applies to the cured solid object.

Examples of the mode in which the solid object is attached to an electric component include a mode in which the solid object seals at least a part of the electric component, a mode in which the solid object is bonded to at least a part of the electric component, and a mode in which the solid object is fixed to at least a part of the electric component. Examples of the "at least a part of an electric component" include a gap present in the electronic component, a recess present on a surface of the electronic component, an electronic substrate included in the electronic component, and an electronic element included in the electronic component.

The method for attaching the solid object to the electric component is not particularly limited, and for example, the solid object can be attached to the electric component by, in the first heating step and the first cooling step, bringing the thermally curable composition in a molten state into contact with the electric component and then cooling them. As a result, the solid object is easily provided with a shape conforming to the shape of the electric component, so that the adhesion of the solid object to the electric component is enhanced. In addition, a solid object may be attached to an electric component by forming a solidified material in the inside of a mold other than the electric component in the first heating step and the first cooling step, then releasing the solidified material from the mold, then bringing the solidified material into contact with the electric component in the second heating step, and then cooling them. The cured solid object obtained after the second heating step may be attached to the electric component using an adhesive or the like.

All of the contents of the Japanese patent application No. 2019-205513 filed on November 13, 2019, are incorporated by reference herein.

### EXAMPLES

The present invention will be specifically explained below by way of examples, but the present invention is not restricted by the following examples and can be put into practice after modifications within a range meeting the gist of the above and the below, all of which are included in the technical scope of the present invention.

### <Method for producing thermally curable composition>

The following blending components were uniformly mixed in the blending amounts given in Table 1 using a twin screw kneading extruder whose temperature was adjusted to 80°C. Then, the prepared material was pulverized into a powder or small granules using a pulverizer, affording each of the thermally curable compositions of Examples 1 to 6 and the thermoplastic compositions of Comparative Examples 1 and 2 (hereinafter, these may be collectively referred to as "compositions").
- Crystalline radically polymerizable compound: urethane methacrylate (2-hydroxyethyl methacrylate adduct of 1,6-hexamethylene diisocyanate (2-HEMA adduct of 1,6-HDI))
- Crystalline radically polymerizable compound: ethoxylated isocyanuric acid triacrylate (A-9300 manufactured by Shin-Nakamura Chemical Co., Ltd.)
- Non-crystalline radically polymerizable compound: epoxy (meth)acrylate (methacrylic acid adduct of bisphenol A type epoxy resin)
- Radically polymerizable monomer: liquid methacrylate (methyl methacrylate)
- Epoxy resin: bisphenol A epoxy resin (bisphenol A type epoxy methacrylate)
- Thermoplastic resin: polyester resin (GM-960 manufactured by Toyobo Co., Ltd.)
- Inorganic filler: fused silica (manufactured by Denka Co., Ltd., average particle size: 24 pm)
- Silane coupling agent: methacrylic silane (KBM-503 manufactured by Shin-Etsu Chemical Co., Ltd.)
- Curing accelerator: imidazole-adduct type latent curing agent (PN-50 manufactured by Ajinomoto Fine-Techno Co., Inc.)
- Free radical generator: dicumyl peroxide (PERCUMYL D manufactured by NOF Corporation)
- Free radical scavenger: para-benzoquinone (PBQ manufactured by Seiko Chemical Co., Ltd.)

### <Method for measuring heat absorption onset temperature TA1, heat absorption completion temperature TA2, and free radical generation temperature TB 1>

Using a differential scanning calorimeter (DSC220) manufactured by Seiko Instruments Inc., 10 mg of each of the compositions described above was put in an aluminum pan, the aluminum pan was sealed by pressing a lid, and DSC measurement was performed from -60°C to 200°C at a temperature raising rate of 10°C/min. The onset temperature of the endothermic peak of the obtained DSC curve was defined as TA1, the end temperature of the endothermic peak was defined as TA2, and the onset temperature of the exothermic peak was defined as a free radical generation temperature TB 1. The measurement was quitted for the compositions of Examples 5 and 6, which were liquid at 23°C.

### <Fluidity (melt viscosity)>

As an index of fluidity at the time of heating the composition, the melt viscosity was measured using a Koka flow tester (CFT-500D) manufactured by Shimadzu Corporation. Specifically, the composition was placed in a sample insertion hole of a cylinder provided with a die having a diameter of 2.0 mm and a length of 10 mm and heated to 90°C, and after preheating for 180 seconds, a piston was pressurized at a pressure of 3 to 100 kgf/cm² to discharge the composition through a nozzle of the die, and the melt viscosity was determined from a point where the shear rate was 1000 sec⁻¹. The fluidity was evaluated according to the following criteria.
A: The melt viscosity is 1000 Pa•s or less.
B: The melt viscosity is more than 1000 Pa•s.

### <Glass transition point>

The glass transition point of the composition was measured in accordance with JIS K 7244-4. First, the composition was placed in a metal mold for a flat plate temperature-controlled to 165°C, the metal mold was then closed, and pressure and heat molding was performed. Thereafter, the metal mold was opened, affording a flat plate-shaped test piece. The flat plate-shaped test piece was cut into a strip shape, affording a test piece for measuring a glass transition point. Using an elasticity measuring device (DVA-220) available from IT Measurement Control Co., Ltd., dynamic viscoelasticity was measured at a temperature raising rate of 2°C/min, in a range of 30 to 250°C, at a frequency of 10 Hz. The tan δ peak temperature was defined as a glass transition point.

### <Residence stability>

The initial viscosity of the composition at 25°C and the melt viscosity after heating at 90°C for 24 hours were measured, the rate of change therebetween was calculated, and the residence stability was evaluated according to the following criteria. The melt viscosity was measured by the above-described method.
A: The rate of change is less than 5%.
B: The rate of change is 5% or more and less than 10%.
C: The rate of change is 10% or more.

### <Blocking resistance>

200 g of the composition was placed in a cylinder having a diameter of 75 mm and a height of 100 mm under an environment of 40°C, a cylindrical weight (4 kg) having a diameter of 74 mm was inserted from the top. Then, the composition was taken out from the cylinder after a lapse of 24 hours with a load being applied, and the blocking state among small granules in the composition was evaluated.
A: There is no blocking among small granules.
B: There is blocking among small granules, but they are not fused and get loosened.
C: There is blocking among small granules, and they are fused and do not get loosened.

### <Curability>

A hole having a diameter of 30 mm was made at the center of a Teflon (registered trademark) plate having a thickness of 2 mm and a size of 50 mm × 50 mm, affording a Teflon (registered trademark) sheet. Then, the Teflon sheet was set in a heat press machine heated to 165°C in advance, and the Teflon sheet was heated to 165°C. Next, 3 g of the thermally curable composition of Example 1 was placed in the hole of the Teflon (registered trademark) sheet, and heated for 3 minutes under a pressure of 5 MPa using a heat press machine to prepare a sample having a diameter of 30 mm and a thickness of 2 mm. Similarly, a sample heated for 5 minutes was also prepared. For each of these samples, DSC measurement was performed from -60°C to 200°C at a temperature raising rate of 10°C/min and the presence or absence of an exothermic peak was checked. Furthermore, similarly, for each of Examples 2 to 6, a sample heated for 3 minutes and a sample heated for 5 minutes were prepared and subjected to DSC measurement, and the presence or absence of an exothermic peak was checked. In these DSC measurements, when no exothermic peak was observed with the sample heated for 3 minutes and the sample heated for 5 minutes, it was determined that the curing time was 3 minutes or less. When an exothermic peak was observed with the sample heated for 3 minutes and no exothermic peak was observed with the sample heated for 5 minutes, it was determined that the curing time was more than 3 minutes and not more than 5 minutes. When an exothermic peak was observed with the sample heated for 3 minutes and the sample heated for 5 minutes, it was determined that the curing time was more than 5 minutes. The curability was evaluated on the basis of these criteria.
A: The curing time was 3 minutes or less.
B: The curing time was more than 3 minutes, and 5 minutes or less.
C: The curing time was more than 5 minutes.

### <Heat resistance>

The rate of weight change of the composition after heating at 200°C for 1 hour based on the weight of the composition at 25°C before heating was measured, and the heat resistance was evaluated. It is presumed that the weight change is caused by the amount of outgas, the volatilization amount of the uncured components, and the like. These results are shown in Table 1.
A: The weight loss ratio is less than 0.3%.
B: The weight loss ratio is 0.3% or more and less than 0.5%.
C: The rate of change is 0.5% or more.

**[Table 1]**

| | | | Unit | Example | | | | | | Comparative Example | |
|---|---|---|---|---|---|---|---|---|---|---|---|
| | | | | 1 | 2 | 3 | 4 | 5 | 6 | 1 | 2 |
| | Classification | | - | Thermally curable composition | Thermally curable composition | Thermally curable composition | Thermally curable composition | Thermally curable composition | Thermally curable composition | Thermoplastic composition | Thermoplastic composition |
| | Crystalline radically polymerizable compound | Urethane (meth)acrylate (2-HEMA adduct of 1,6-HDI) | Parts by mass | 70 | 50 | - | 50 | - | - | - | - |
| | | Crystalline radlcally-polymerizable monomer (Ethoxylated Isocyanuric acid triacrylate) | Parts by mass | 30 | 50 | 100 | - | - | - | - | - |
| | Non-crystalline radically polymerizable compound | Epoxy (meth)acrylate ((meth)acrylate adduct of a bisphenol A type epoxy resin) | Parts by mass | - | - | - | 50 | - | - | - | - |
| | Radically-polymerizable monomer | Liquid methacrylate (MMA) | Parts by mass | - | - | - | - | - | 100 | - | - |
| | Epoxy resin | Bisphenol A epoxy resin | Parts by mass | - | - | - | - | 100 | - | - | - |
| | Thermoplastic resin | Polyester resin | Parts by mass | - | - | - | - | - | - | 100 | 100 |
| | Filler | Fused silica | Parts by mass | 650 | 650 | 650 | 650 | 650 | 650 | 0 | 650 |
| | Silane coupling agent | Methacrylic silane | Parts by mass | 3 | 3 | 3 | 3 | - | 3 | - | - |
| | Curing accelerator | Imidazole-adduct type latent curing agent | Parts by mass | - | - | - | - | 10 | - | - | - |
| Composition | Free radical generator | Dicumyl peroxide | Parts by mass | 1 | 1 | 1 | 1 | - | 1 | - | - |
| | Free radical scavenger | Para-benzoquinone | Parts by mass | 0.2 | 0.2 | 0.2 | 0.2 | - | 0.2 | - | - |
| | | Heat absorption onset temperature (TA1) | °C | 54 | 54 | 36 | 54 | Stop of measurement | Stop of measurement | 130 | 130 |
| | | Heat absorption completion temperature (TA2) | °C | 75 | 75 | 60 | 75 | Stop of measurement | Stop of measurement | 195 | 195 |
| | Characteristic | Curing onset temperature, Free radical generation temperature (TB1) | °C | 110 | 110 | 110 | 110 | 96 | 110 | - | - |
| | | Melt viscosity at 90°C | Pa·s | 6 | 6 | 6 | 60 | 9 | 5 | - | - |
| | | Glass transition point (DMA) | °C | 190 | 215 | > 250 | 155 | 164 | 100 | -70 | -70 |
| | Heating time at 165°C | | Minute | 3 | 3 | 3 | 3 | 120 | 3.5 | - | - |
| | | Fluidity (Melt viscosity at 90°C) | - | A | A | A | A | A | A | - | - |
| | | Residence stability (Rate of change in melt viscosity before and after heating at 90°C) | - | A | A | A | A | C | A | - | - |
| | Result of evaluation | Blocking resistance (40°C) | - | A | A | B | A | C | C | A | A |
| | | Curability (Curing time) | - | A | A | A | A | C | B | - | - |
| | | Heat resistance (200°C) | - | A | A | A | A | A | A | C | B |

### <Production of cured solid object>

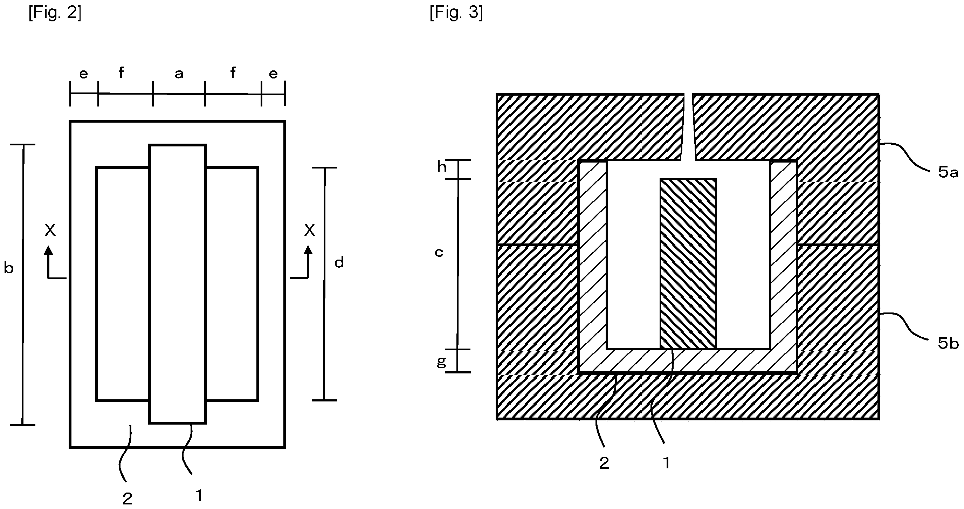

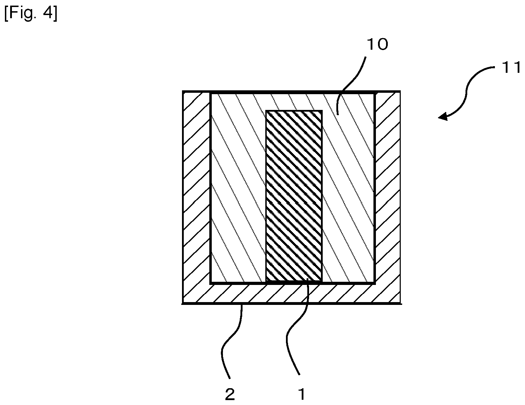

A 1.6 mm thick, resist-free glass epoxy substrate (FR-4) manufactured by Nikkan Industries Co., Ltd. was cut into a size of 40 mm × 40 mm, and the surface thereof was wiped with acetone, whereby oil was removed. Next, the glass epoxy substrate 1 was inserted into a 50 mm high polybutylene terephthalate container 2 having a planar shape depicted in Fig. 2 and having a cross-sectional shape taken along line X-X in Fig. 2 depicted in Fig. 3, and the container 2 with the glass epoxy substrate 1 was inserted into a metal mold 5 including an upper metal mold 5a and a lower metal mold 5b and having an inner surface dimension 40 mm in width, 42 mm in length, and 50 mm in height, and was fixed. Subsequently, using a vertical type low pressure extruder (IMC-18F9) manufactured by Imoto Machinery Co., Ltd., which is a screw type applicator for hot melt molding process, each of the compositions of Examples 1 to 6 was injected through a circular one-point gate 4 mm in diameter provided at the center of the top face of the upper metal mold 5a, and molding was performed. The molding conditions were set as follows: mold temperature: 25°C; molding resin temperature: 80°C, molding pressure: 3 MPa, keeping pressure: 3 MPa, and discharge rotation: 50% (the maximum discharge: 100%). Subsequently, the resulting product was released from the metal mold 5, affording a composite of the solid object 10, the glass epoxy substrate 1, and the polybutylene terephthalate container 2 (namely, solid object composite 11) depicted in Fig. 4. Further, the solid object composite 11 was subjected to heating treatment in a heating oven at 165°C, for 3 minutes in Example 1 to 4, 120 minutes in Example 5, and 3.5 minutes in Example 6, affording a cured solid object composite. In Figs. 2 and 3, the dimensions of the widths of the reference signs a to h are a = 1.6 mm, b = 40 mm, c = 40 mm, d = 38 mm, e = 1 mm, f = 18.2 mm, g = 1 mm, and h = 9 mm.

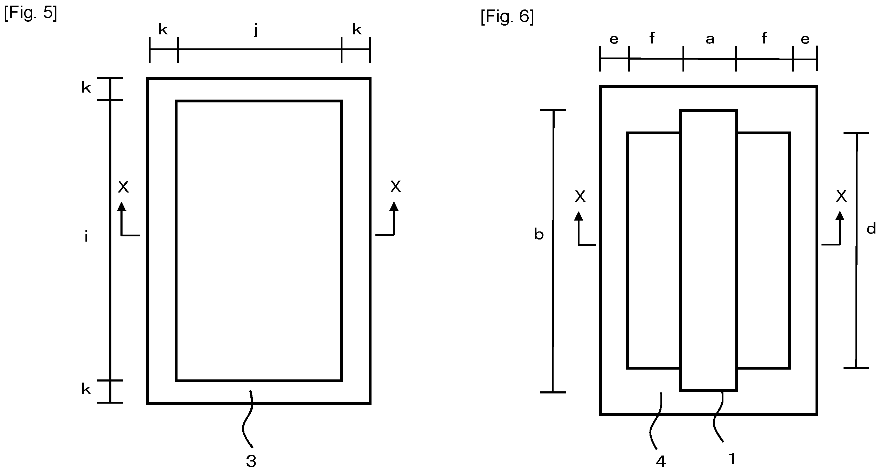

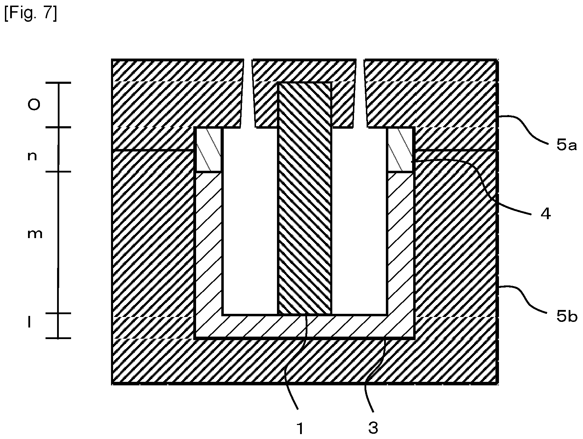

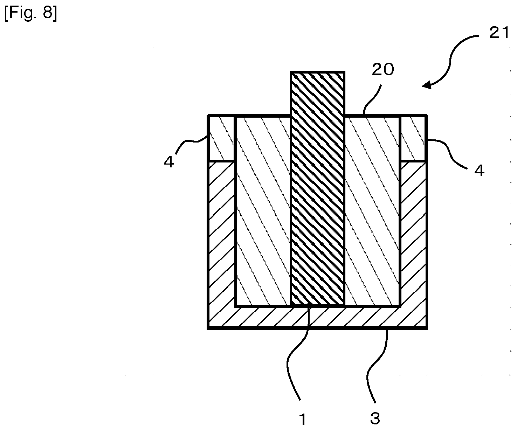

A 1.6 mm thick, resist-free glass epoxy substrate (FR-4) manufactured by Nikkan Industries Co., Ltd. was cut into a size of 40 mm × 70 mm, and the surface thereof was wiped with acetone, whereby oil was removed. Subsequently, the glass epoxy substrate 1 was disposed in a 50 mm high polybutylene terephthalate container 3 having a planar shape depicted in Fig. 5 and having a cross-sectional shape taken along line X-X in Fig. 5 depicted in Fig. 7. Further, a 10 mm high polybutylene terephthalate frame 4 having a planar shape depicted in Fig. 6 and having a cross-sectional shape taken along line X-X in Fig. 6 depicted in Fig. 7 was disposed in the polybutylene terephthalate container 3. This assembly was inserted into a metal mold 5 including an upper metal mold 5a and a lower metal mold 5b as depicted in Fig. 7, and was fixed. Subsequently, each of the compositions of Examples 1 to 6 was injected through a circular gate 4 mm in diameter provided at the center of the face sized 18.2 mm × 38 mm of the upper metal mold 5a, and was molded in the same manner as in the case of the solid object 10. Subsequently, the resulting product was released from the metal mold 5, affording a composite of the solid object 20, the glass epoxy substrate 1, the polybutylene terephthalate container 3, and the polybutylene terephthalate frame 4 (namely, solid object composite 21) depicted in Fig. 8. Further, the solid object composite 21 was subjected to heating treatment in a heating oven at 165°C, for 3 minutes in Example 1 to 4, 120 minutes in Example 5, and 3.5 minutes in Example 6, affording a cured solid object composite. Note that, in Figs. 5 to 7, the dimensions of the widths of the reference signs i to O are i = 40 mm, j = 38 mm, k = 1 mm, l = 1 mm, m = 49 mm, n = 10 mm, and O = 10 mm. The dimensions of the widths of the reference signs a, b, d, e, f, and h are as described above.

Since the solid objects 10 and the solid objects 20 obtained from the compositions of Examples 1 to 6 had low melt viscosity at the time of molding, it is considered that they had a shape conforming to the shapes of the inside of the polybutylene terephthalate container 2, the polybutylene terephthalate container 3, and the polybutylene terephthalate frame 4, and a shape conforming to the shape of the glass epoxy substrate 1, respectively. Furthermore, it is considered that the cured solid objects resulting from curing treatment of those solid objects were also in a shape conforming to the internal shapes of the polybutylene terephthalate container 2, the polybutylene terephthalate container 3, and the polybutylene terephthalate frame 4, and in a shape conforming to the shape of the glass epoxy substrate 1. Note that the polybutylene terephthalate container 2, the polybutylene terephthalate container 3, and the polybutylene terephthalate frame 4 correspond to the above-mentioned "mold", and the glass epoxy substrate 1 corresponds to "another member", which is a member other than the above-mentioned mold.

### DESCRIPTION OF REFERENCE SIGNS

- 1: Glass epoxy substrate
- 2: Polybutylene terephthalate container
- 3: Polybutylene terephthalate container
- 4: Polybutylene terephthalate frame
- 5: Metal mold
- 5a: Upper metal mold
- 5b: Lower metal mold
- 10: Solid object
- 11: Solid object composite
- 20: Solid object
- 21: Solid object composite

## Claims

1. A method for producing a solid object of a thermally curable composition, the method comprising:
a first heating step of heating the thermally curable composition at a temperature of a melting onset temperature (°C) of the thermally curable composition or more and less than a curing onset temperature (°C) of the thermally curable composition; and
a first cooling step of introducing the thermally curable composition into a mold and cooling the thermally curable composition to a temperature lower than the melting onset temperature (°C).

2. The method for producing a solid object according to claim 1, wherein the thermally curable composition comprises a crystalline radically polymerizable compound.

3. The method for producing a solid object according to claim 2, wherein the thermally curable composition comprises a free radical generator that generates at least one free radical at a temperature of the curing onset temperature (°C) or more.

4. The method for producing a solid object according to any one of claims 1 to 3, wherein the melting onset temperature is a heat absorption onset temperature TA1 (°C) in differential scanning calorimetry of the thermally curable composition.

5. The method for producing a solid object according to claim 4, wherein the heat absorption onset temperature TA1 (°C) is 36°C or more.

6. The method for producing a solid object according to any one of claims 1 to 5, wherein the curing onset temperature is a temperature of a heat absorption completion temperature TA2 (°C) in differential scanning calorimetry of the thermally curable composition + 10°C or more.

7. The method for producing a solid object according to any one of claims 1 to 6, the method further comprising:
a second heating step of heating the solid object at a temperature of the curing onset temperature (°C) or more; and
a second cooling step of cooling the solid object to a temperature less than the curing onset temperature (°C).

8. The method for producing a solid object according to claim 7, wherein the heating in the second heating step is performed collectively for a plurality of the solid objects after the first cooling step.

9. The method for producing a solid object according to claim 7, wherein the heating in the second heating step is performed by sequentially heating a plurality of the solid objects after the first cooling step.

10. The method for producing a solid object according to any one of claims 1 to 9, wherein the thermally curable composition comprises a free radical scavenger.

11. The method for producing a solid object according to any one of claims 1 to 10, wherein the thermally curable composition comprises a non-crystalline radically polymerizable compound.

12. The method for producing a solid object according to any one of claims 1 to 11, wherein the crystalline radically polymerizable compound is at least one selected from the group consisting of an epoxy (meth)acrylate, a urethane (meth)acrylate, a polyester (meth)acrylate, a polyether (meth)acrylate, and an unsaturated polyester.

13. The method for producing a solid object according to any one of claims 1 to 12, wherein the solid object is a solid object to be used in attachment to an electric component.
